# EUROPEAN PATENT SPECIFICATION

(11) **EP 0 657 057 B1**
(45) Date of publication and mention of the grant of the patent: **01.07.1998**
(21) Application number: 93918072.5
(22) Date of filing: 23.08.1993
(51) Int. Cl.: G09B 9/10, G09B 9/14

(54) **PRESSURE PAD SYSTEMS**
DRUCKKISSENSYSTEME
SYSTEMES SOUS PRESSION

(30) Priority: 21.08.1992 GB 9217759; 15.09.1992 GB 9219528; 25.09.1992 GB 9220256
(43) Date of publication of application: 14.06.1995
(73) Proprietor: DENNE DEVELOPMENTS LIMITED, Wimbourne, Dorset, BH21 7SB (GB)
(72) Inventor: DENNE, Phillip, Raymond, Michael 7 Lyndon Gate, Bournemouth BH2 5LW (GB)
(74) Representative: Crawford, Andrew Birkby
(86) International application number: GB9301788
(87) International publication number: WO9404999

(56) References cited:
- WO-A-91/17536
- WO-A-93/01577
- US-A- 4 059 909

## Description

The present invention relates to the control of pressure in one or more cushions or pads in a low-pressure regime, that is, at pressures of the sort generally applicable to the human body. More particularly, the invention concerns the control of pressure in such pads using a piston/diaphragm and cylinder device.

There is a wide variety of situations in which it is desirable to control pressure in cushions or pads applied to the human body. Motion simulation chairs are known in which the sensation of movement is imparted to a seated person by variation of pressure in cushions on the seat and back of the chair. Similarly, special beds or mattresses have been constructed for the avoidance of bed sores and these may consist of a matrix of inflatable air cells whose pressure is controlled.

Furthermore, a number of new uses of controllable-pressure pads suggest themselves. For example, a massage cuff or sleeve could be formed from one or more variable-pressure pads. Beds, couches or mattresses having arrays of variable-pressure pads may have pressure changes co-ordinated with some outside stimulus, such as music or the breathing/pulse of a subject, for the purposes of relaxation or aiding sleep. Also, there are applications where it is desirable to maintain a constant pressure in a pad despite changes in its loading, for example in order to reduce the effects of a bumpy ride on a seated passenger.

The following description will be given in terms of pressure control in a motion simulation seat. However, it is to be understood that corresponding features may be used for other applications, such as those mentioned above, with appropriate adaptation of detailed structure and control.

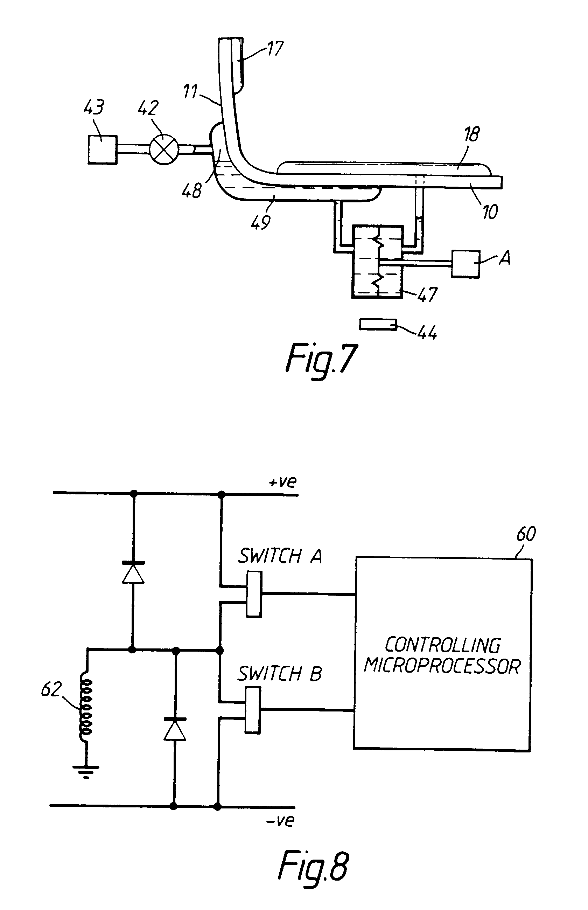

As indicated above, motion simulation seats using variable-pressure pads are already known. US patent 4059909 describes such a seat and, in Fig. 8 thereof, indicates how pressure in the pads is controlled. Control signals A'B' are used to activate valves 77,78 connected to a source of pressurized air so as to increase pressure in the associated pads. In order to decrease pad pressure the valves are arranged to exhaust to the outside.

US patent 4321044 relates to a motion simulation seat of the same general type, in which pad pressure is monitored by a pressure transducer. Control signals taking into account existing pad pressure are used selectively to activate a flow valve connected to a compressor and a vacuum pump (see Fig.7 thereof).

Embodiments of the present invention provide apparatus for accurately controlling pressure in pads while avoiding the cost and complexity of systems using pressure feedback transducers. Furthermore, embodiments of the invention have relatively low energy consumption.

The present invention provides apparatus selectively to control pressure in a pad within a range suitable for application to the human body, comprising:
a sealed vessel having first and second ends, the first end being in communication with the interior of the pad;
a piston or diaphragm arranged within the vessel to separate the ends of the vessel and slideable towards and away from the first end of the tube;
means for applying a controlled force to move said piston or diaphragm within the vessel, whereby to modulate the pressure in the pad.

The advantage of this combination is that the piston or diaphragm both applies the force to alter pad pressure and experiences a force arising from existing pad pressure, moving until the forces are in balance. Therefore no separate pressure transducer is necessary. Furthermore, because fluid merely moves backwards and forwards between the pad and the vessel noise and energy losses are reduced compared to the known systems.

In preferred embodiments of the invention, the piston or diaphragm is electromagnetically actuated. One simple arrangement of that sort could use an electric motor and a crank or a screw to drive the piston or diaphragm. However, preferred electromagnetically-actuated piston/diaphragm embodiments have a tubular stator which may be thought of as the stator of a conventional motor slit along a plane passing through the axis of the armature and unrolled, with the uncut stator ends being brought together. The piston or diaphragm then is provided with ring-shaped magnetic portions.

Electromagnetically-actuated devices of the preferred type have force-to-weight ratios comparable to those of servo valve/ hydraulic devices but provide a precision and response comparable to those of linear motors. The preferred devices also provide energy savings of up to 80-90% compared with servo valve/ hydraulic devices. Furthermore, these devices avoid the use of rotating moving parts and can be built without using hermetic oil seals, which allows them to be sterilised. This is a particular advantage for medical applications.

Many varieties of the preferred type of electromagnetically-actuated device are described in our co-pending international patent application W093/01646, the disclosure of which is incorporated herein by reference. One such embodiment uses a cylinder of ferro-magnetic material bearing a coil and a piston which carries one or more annular magnets. It is to be understood that this, or any of the embodiments of actuator according to that international application (including short-stroke devices based on the same principles), may be used in the present invention. In particular, the electromagnetic interaction causing movement of the piston or diaphragm may be produced using:
a) one or more permanent magnets on the cylinder or the piston/diaphragm interacting with current in one or more coils on the other member (the coil current may be DC or other suitable waveforms such as rectified AC or a series of unipolar pulses);
b) one or more electromagnets replacing the permanent magnets of a);
c) varying AC currents in coils on both the cylinder and the piston/diaphragm; or
d) electromagnetic induction acting on the piston/diaphragm or cylinder, caused by electromagnets on the cylinder or piston/diaphragm, respectively.

In motion simulation seats it is necessary to counterbalance the weight of the seat's occupant quite apart from then applying varying pad pressures in order to produce a sensation of motion. In particular, the occupant's weight produces a pressure in the pad which tends to displace the piston or diaphragm so as to allow the pad to deflate. Deflation of the seat is undesirable, as is the option of providing a constant energising signal to actuate the piston or diaphragm (because that would consume energy continuously). A corresponding problem arises in other applications of variable-pressure pads where a deadload acts on the pad.

Preferred embodiments of the invention apply a deadload-balancing pressure to the reverse side of the piston or diaphragm (i.e. the side remote from the pad). The apparatus can be arranged to adapt to the particular deadload-balancing pressure during subsequent pad pressure control operations. After the initial adaptation it is not necessary to put energy into the system in order to maintain the piston or diaphragm in position.

A number of different arrangements can be used to produce the deadload-balancing pressure. In particular, for this purpose it is convenient to use a gas-filled reservoir and means for altering the pressure in the reservoir responsive to a piston/diaphragm position sensor. This produces a deadload-balancing pressure tailored to the particular magnitude of deadload involved at a particular time. During subsequent pad pressure control operations, the force applied to the piston or diaphragm in order to produce a desired pad pressure change may be scaled with reference to pressure reigning in the reservoir.

As an alternative to the above-mentioned adaptive techniques, a suitable "standard" deadload-compensating pressure (e.g. 2 psi) may be predetermined and may be applied, for example, using a reservoir.

The frequency response of the control system may be improved by filling the pressure pad with liquid. In embodiments where piston displacement is related to desired pad pressure this has the added advantage that it produces a linear system rather than the logarithmic system obtained using a gas.

In general, friction in the system is minimized if short, large-diameter pipework is used for connecting the pressure control apparatus to the pad to be controlled.

The piston/diaphragm and cylinder device may be actuated using a high frequency signal which is modulated in accordance with a digital control signal so as to control the amount of time the waveform is negative or positive. Preferably, the high frequency signal is at ultrasonic frequencies (so as to produce silent operation) and experiences pulse width modulation.

Further features and advantages of the present invention will become clear from the following description of embodiments thereof, given by way of example, and illustrated by the accompanying drawings, in which:
Figure 1 is a diagrammatic side elevation of a motion simulation seat in which the present invention may be used;
Figure 2 is a plan view of the seat of figure 1 ;
Figure 3 illustrates diagrammatically one way of adjusting the pressure in a cushion or pad of the seat;
Figure 4 shows a preferred embodiment of the pressure control piston/diaphragm and cylinder device according to the invention;
Figure 5 illustrates diagrammatically an alternative control system for adjusting the pressure in a cushion or pad of the seat;
Figure 6 illustrates diagrammatically a further control system for adjusting the pressure in a cushion or pad or the seat;
Figure 7 illustrates diagrammatically another control system for adjusting the pressure in a cushion or pad of the seat and shows a diaphragm in place of the piston of Fig. 5; and
Figure 8 illustrates a technique for controlling piston/diaphragm actuation using a modulated high frequency pulsed signal.

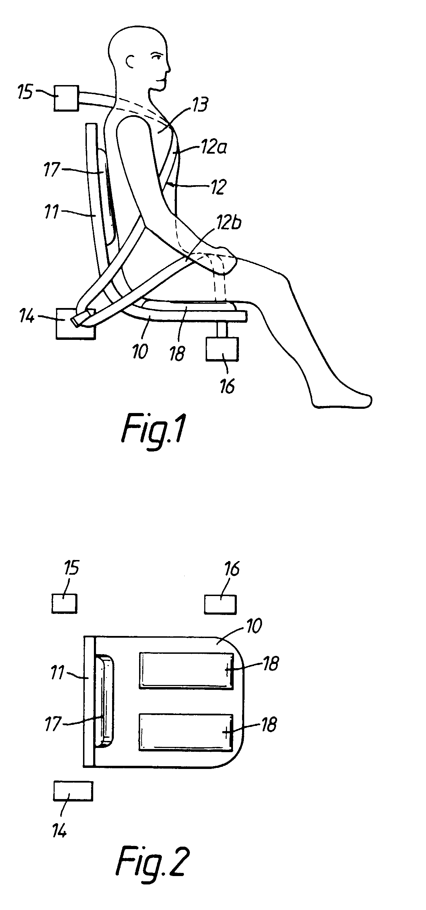

The motion simulation seat shown in figures 1 and 2 has a seat portion 10 and a back portion 11. The seat is provided with a seat belt 12 comprising a diagonal portion 12a which extends across the chest of the occupant 13 and a portion 12b which extends across the thighs of the occupant 13. The belt 12 is provided with a fastener 14. One end of the portion 12a is connected to an actuator 15 and one end of the portion 12b is connected to an actuator 16. The seat belt 12 is similar to that of a car seat belt. The supply reel is conventionally located but the shoulder buckle is arranged to grip the seat belt via a clamping device which is fixed to the actuator 15 which moves in the fore and aft direction thus adjusting the pressure applied to the chest of the occupant 13. The fixed floor strap point is connected to actuator 16 which adjust pressure in the vertical direction. The back portion 11 of the seat is provided with a back cushion or pad 17 and the seat portion 10 is provided with two thigh supporting cushions or pads 18.

The cushions or pads 17 and 18 contain a fluid whose pressure can be varied. In the embodiment of figures 1 and 2 the cushion or pad 17 is located in the centre of the back and the cushions or pads 18 beneath the cheeks of the bottom of the occupant 13. It will be appreciated that cushions or pads can be placed beneath both thighs, the base of the bottom, the small of the back and the should area of the back of the occupant 13.

By controlling and adjusting the pressure within the cushions or pads 17, 18 and the tightness of the seat belt portions 12a and 12b, by means of the actuators 15 and 16, the occupant 13 has the sensation of motion when the pressure variations are synchronized with appropriate visual imagery.

The pressure exerted by the cushions or pads 17, 18 on the skin of the occupant 13 can be altered by transferring fluid between the cushion and the fluid reservoir located beneath or behind the seat. The fluid movements can be controlled by a displacement device which may be a double-acting cylinder driven by an actuator. When the actuator is driven in one direction fluid is displaced from the reservoir into the cushion or pad causing an increase in pressure on the skin surface of the occupant, and when the actuator is driven in the opposite direction fluid is displaced from the cushion or pad into the reservoir causing a decrease in the pressure on the skin surface of the occupant. All these cushions or pads can be operated independently and in coordination with movement of the actuators 15 and 16 of the seat belt 12. The actuators 15 and 16 may be manufactured from the cone drive units used in conventional loudspeaker systems. In the alternative, the seatbelts may be made from hollow tubes which may be inflated or deflated to vary their effective tension.

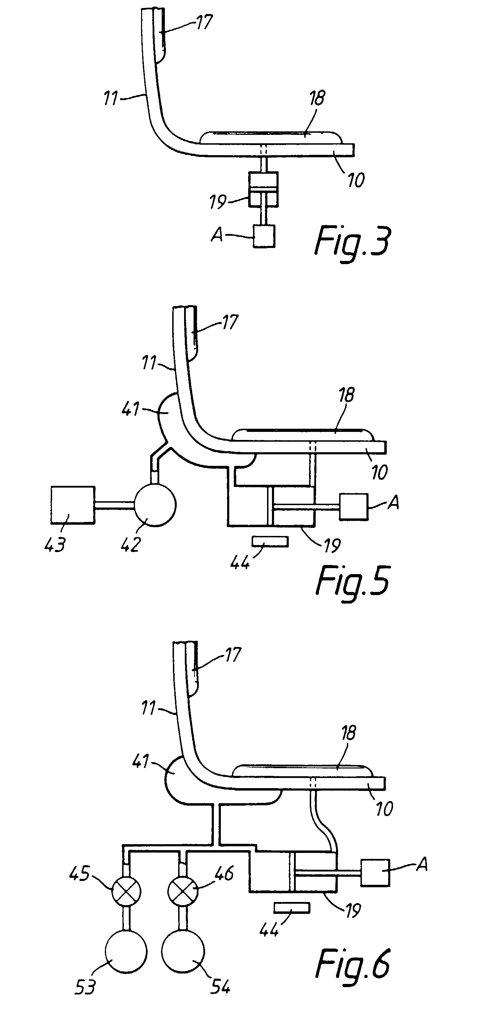

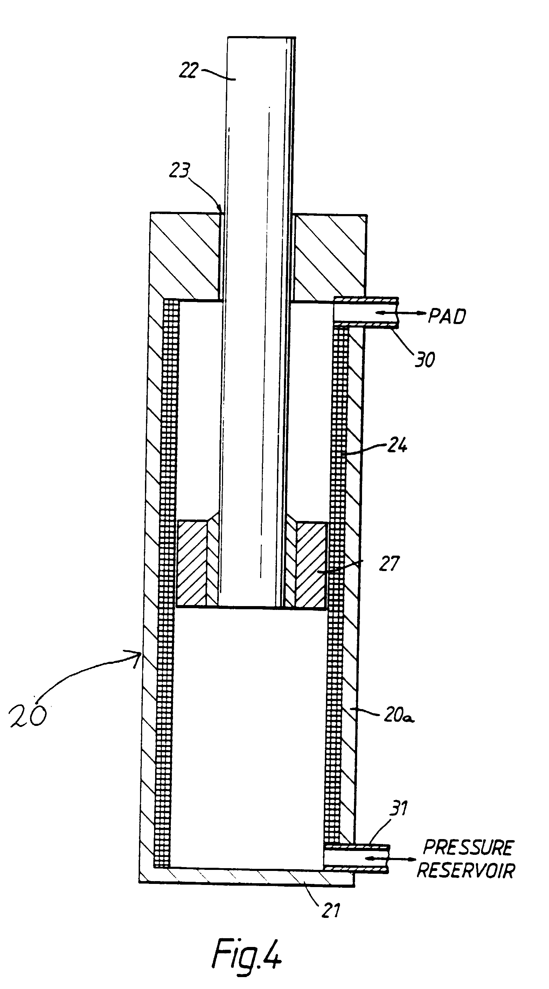

Figure 3 shows diagrammatically the basic principle of cushion or pad operation. In this embodiment, the displacement device comprises a double-acting piston and cylinder device 19 connected to an electromagnetic means A. At its simplest, the electromagnetic means A may be the equivalent of a loudspeaker cone driving actuator and the piston and cylinder device 19 may be pneumatic.

It will be understood that the algorithms which must be used for the modulation of cushion pressure so as to simulate motion are not obvious or simple (This is well-covered in the existing literature). For example, the events which occur when a upthrust is applied to the cushioned seat are first, that the occupant sinks deeper into the seat cushion and increases the area over which the seat cushion supports the skin. This compression of the cushion also increases its hardness (pressure) until the product of pressure and area equal the new force applied to the seat occupant. It is therefore a known technique to include within the structure of simulator seat cushions a harder material onto which the body of the occupant is lowered (by decreasing cushion pressure) to cause an increase in surface pressure on the ischial tuberosities.

Our new means for modulating pressure in a simulator seat allow such strategies to be applied with great precision.

It is known that a constant acceleration can be simulated by an initial change (e.g. of pressure in a pad) followed by a gradual restoration of the original conditions. This "wipeout" of the initial stimulus is not perceived by the subject if it is sufficiently slow and it has the benefit of returning the simulator to a state where it has freedom to apply a fresh stimulus in any desired direction. According to the present invention it is preferred to build this "wipeout" feature into the control algorithm rather than the pneumatics/hydraulics. However, in some circumstances it may be permissible to achieve the "wipeout" using fine diameter pipes to leak fluid between the pad and a reservoir held at a constant pressure.

The impressions of movement are enhanced by coordinated movements of the seat belt actuators 15 and 16, the seat belt 12 being lowered or tightened at the appropriate time, just as would occur were a real movement to be present. The diagonal strap portion 12a is tightened or loosened to a small degree in coordination with inflation and deflation of the back cushion or pad 17.

As mentioned above, preferred embodiments of the invention use an electromagnetically-actuated piston and cylinder device of the type described in our copending international patent application W093/01646. In the particular example shown in FIG.4, a cylinder 20a of a magnetic material such as steel has one end closed by an end piece 21 and a rod 22 extends through an opening 23 in the other end of the cylinder 20a. The cylinder 20a is provided with a coil arrangement 24 which is connected via a control unit (not shown) to a power supply. The rod 22 is provided with a piston-like member 27 which carries one or more annular magnets. An opening 30 provides a connection to the interior of the cylinder 20a on one side of the member 27 while a further opening 31 provides a connection to the interior of the cylinder 20a on the other side of the member 27.

The coil arrangement 24 on the cylinder is arranged so as to produce radial magnetic fields extending between the piston-like member 27 and the cylinder 20a. The polarities of the radial fields alternate in the axial direction. The current in the coil arrangement is varied so as to create a travelling wave in the axial direction which interacts with the annular magnet(s) on the piston causing it to move.

Embodiments of the type shown in Fig.8, where one or more permanent magnets are provided on the piston/diaphragm and coils are provided on the cylinder (preferably on the outside), favour the use of relatively expensive materials, such as neodymium iron boron, and avoid the need for flexible lead connections to the piston/diaphragm. An example of such an embodiment having an outside diameter of 120mm, a maximum stroke length of 200mm and weighing 24 kg is expected to generate 150kgf of thrust electrically (with 300kgf of thrust being produced by the deadload-compensating means).

An example of an alternative actuator embodiment, in which the piston carries an 8-coil armature, the cylinder carries a series of ferrite permanent magnet rings and the length of the armature is substantially equal to that of two ring magnets and spacers, generates 30 kgf electrically (using currents in the armature which reach 5 Amp max. in each coil) and may have 150kgf generated by the deadload-balancing means. A linear potentiometer may be used to sense piston position.

It is to be understood that, as mentioned above, other types of electromagnetically-actuated piston/diaphragm and cylinder device according to international application WO 93/01646 may be used in place of the particular example illustrated in Fig.8..

Turning now to consider how pressure is transferred by an actuator of the Fig.8 type, the opening 30 is connected to the pressure pads while the opening 31 is connected to a pressure reservoir. With this arrangement, when a cylinder 20a is filled with compressed air beneath the member 27, the weight of the occupier is just supported by the thrust produced. It will be understood that the piston and cylinder device is thus counter-balancing the weight of the occupier.

Providing that the movement of air between the piston and its extemal reservoir is freely permitted by the use of short, large diameter pipes there is a minimum of friction in the system.

It will be seen that the ends of the cylinder are securely closed against air pressure and that air connections are fitted into the walls of the cylinder as shown. The piston is arranged to be sealed by some means against the inner wall of the surrounding tube, and the piston rod is sealed in a similar manner and the actuator functions both as a pneumatic spring and also as an electromagnetic force unit. In some circumstances the rod 22 can be omitted and this simplifies the structure.

During the normal process of simulation actuation, when the piston will be moving in a pseudo random manner and at relatively high speed within the cylinder, the air beneath the piston will be alternately compressed and expanded, so that in order to keep the system pressure constant it will try to move a mass of air backwards and forwards between the piston and the reservoir. The same will occur at the upper end of the cylinder, when the air above piston will be alternately pushed into the pad and withdrawn from it.

To reduce the inevitable friction losses, and turbulence, in this process to a minimum the air vent opening should be as large as possible and the path of air flow to the reservoirs should be made smooth and short.

Fig. 5 illustrates a system which accommodates pad deadloads of varying sizes (i.e. people of different weight). In this system each side of piston 19 is connected to a bladder, one being a cushion or pad 18 and the other being a reservoir 41 located in a convenient position beneath the seat and which does not have to be flexible. When a subject first sits down in the motion simulation seat of Fig.5, there is a pressurisation step. The subject may be instructed to sit still during this step. The pressure in the reservoir 41 is adjusted by a reversible pump 42 driven by a small electric motor 43 until the mean position of the piston 19 is in the centre of its cylinder. The electric motor 43 is controlled by a sensor 44 which senses the position of the piston 19. When the occupant 13 is seated and no "g" force simulation is required then in systems where the control signal determines the force applied by the piston/diaphragm (linear systems), then it is preferable to locate the piston 19 is in its mid stroke position ready to apply an increase or decrease in the pressure within the cushion or pad 18. In systems where the control signal determines piston/diaphragm displacement then, because the pressure-control action of the piston 19 would be logarithmic rather than linear, the optimum position would be biased towards the high pressure end.

If the occupant 13 changes his seat position and in doing so alters the mean pressure exerted on one of the cushions 18 the pump 42 runs to increase or decrease the pressure in the system slowly until the mean position of the piston 19 is again located in the datum position in the cylinder.

When no transient acceleration is to be simulated no energy is used by the system. The actuator A does not need to be powered and the pump 42 stops running when the piston 19 is in the datum position. The system is self compensating for occupants of different weights. A heavy occupant might have the seat cushion inflated to a higher pressure than that required for a child and this compensation will occur quietly and imperceptibly without any conscious action by the occupant. In the alternative, if a "standard" pressure is predetermined, a heavy occupant will sit deeper into the seat, thus increasing the area of pad used to support the load. When the pad pressure is to be dynamically controlled then the deadload balancing pressure should be held constant at the level previously determined.

Figure 6 illustrates a system which utilizes a single piston 19 for the complete system and individual valves 45 and 46 for each of the cushion or pads 18. When it is required to increase the pressure in the reservoir 41 the valve 45 is opened to a pressure source 53 via a restrictive orifice so that the pressure slowly increases. When the pressure in the reservoir 41 is at the correct level the valve 45 closes. Conversely, if the pressure in the reservoir 41 is too high the valve 46 opens and decreases the pressure until the sensor 44 against detects that the piston 19 is in the datum position. This system can be used for a single chair with a minimum of three cushions or pads or for a row of chairs or for all the chairs in a complete theatre, in which case the valves 45 and 48 are connected to flow and return conduits and a central pumping system.

Figure 7 shows a system in which the cushions 17 and 18 are filled with liquid such as water. With a hydraulic system it is unnecessary to move large volumes of fluid, since the liquid is incompressible. It is only necessary to move sufficient quantity of liquid to increase or decrease the pressure to the cushion or pads. The cushions or pads may be compliant in form whilst remaining almost constant in volume at varying pressures.

In this embodiment the piston 19 is replaced by short stroke piston or diaphragm unit 47. Nevertheless an air pressure reservoir 48 is required above the liquid reservoir 49 to provide the balancing force as previously described. A further advantage of liquid filled cushions or pads is that the pressure modulation system is linear and not logarithmic as is the case for gas filled systems. Because little fluid transfer takes place the cushion pressures can be altered very rapidly if required; i.e. the frequency response is improved.

The control system for the mechanism shown in Figure 7 has a pressure transducer fitted in the reservoir 48 and the actuator A is connected to an electrical power amplifier. A position sensor 44 senses the datum position of the piston 47. The pressure in reservoir 48 is changed slowly so as to maintain the piston 47 at a mean position corresponding to the datum. This compensates for weight of the occupant and reduces power consumption as previously explained.

The actuator A has a transfer coefficient from electrical drive current to cushion pressure which is a direct linear function. This is an inherent property of the system, which has the advantage that it removes the requirement for any pad pressure measurement and feedback transducer.

An advantage of this form of control system is that the microprocessors in each individual seat can be connected to a central communications circuit and instructed simultaneously and in parallel by a command processor which synchronises the movement of every seat to the movement of the visual imagery shown on the screen.

Each seat can be considered as a complete self-contained module, it being necessary only to plug into the electrical power supply, the control interface and the central source of power. The power source may be a pressure system for the row of seats or a conventional single phase mains supply for driving individual pumps at each seat position.

Each individual seat module having a microprocessor control incorporated therein, may carry out an automatic self-testing sequence upon initiation and at regular intervals as required. If necessary it can be arranged to report defects back to a central computing unit which controls all seats in the cinema so that defective seats may be quickly located and replaced.

The seat cushions 17 and 18 preferably incorporate an adequate amount of foam filling so that should the fluid control system in any seat not be operative, the seat still functions as a comfortable support for someone watching a conventional cinema presentation. Preferably the cushions are covered in a material which obstructs vandalism, such as Kevlar®.

It is also possible to arrange to disconnect the control drive to any faulty seat at will so that the occupant may experience the visual imagery without the additional stimulation of the skin surfaces caused by a fully operational simulator seat. By this means the continuity of performance as a whole can be maintained even when faulty components are present in the system.

In an installation where a number of pads are required to be controlled using a plurality of piston and cylinder devices according to the invention, the piston and cylinder devices require individual analogue current sources, presumably derived from computer output signals controlling a D to A converter, an analogue multiplexer, a series of sample-and-hold amplifiers, buffers and current drivers. Whilst this technology is neither difficult nor expensive, it is relatively complex and therefore liable to failure. The potential applications for this technology favour the most ruthless simplicity which can be achieved.

It is therefore proposed that the piston and cylinder device be actuated using a pulsed high frequency signal modulated with reference to a digital signal. Figure 8 illustrates an electromagnetic actuator embodiment of the invention incorporating this feature.

As shown in fig.8, an array of pressure-control actuators, such as might be used to modulate pressure in an array of pads in a simulator seat, are each powered through the energisation of one or other solid state switch of a pair A, B. The switches are responsive to the output of a microprocessor controller 60. The switches control the flow of current to a coil 62 used in the actuation of the piston/diaphragm which modulates pad pressure.

During the time when switch A is energised, the current in the actuator coil is increased positively and during the time that switch B is energised, the current in the actuator is increased in the negative sense. The switches are pulsed at a frequency of, say, 20 KHz, for a time which is variable in accordance with a number stored in a register to which the controlling microprocessor refers.

This arrangement dispenses with the need for an array of analog to digital and digital to analog convertors. It is merely necessary to transmit to each seat-control microprocessor (or the like) a set of numbers corresponding to the magnitudes of the switch pulse lengths - which produce pad pressures in direct proportion as has been described earlier.

In order for products incorporating pressure control apparatus according to the invention to become popular it is preferable that the piston and cylinder devices should be trouble-free. This means that they should be resistant to the presence of dust and smoke particles in the air supply system (if filters are fitted, they are not likely to be well maintained). They should be resistant to moisture, even condensation, in the air lines and to storage and operation at reasonable temperature extremes.

It is possible that during transport and normal operation the piston and cylinder devices will be subjected to vibration and shock which, although it might cause a temporary malfunction, must not be allowed to impair their life or normal operation. It is also preferable that any valves in the equipment should be reasonably robust.

In order to satisfy the parameters set out above, it is clear that the valves should be self-lubricating and made of materials which allow to be produced in large quantities and at relatively low cost. This favours use of materials such as self-lubricating plastics (e.g. polyamides or nylons) and metals which do not rust, such as stainless steel or, possibly, aluminium.

Embodiments of the invention are possible where the movement of the piston or diaphragm is controlled using a stepper motor or stepping linear actuator. These embodiments relate the control signal to pad pressure in a logarithmic fashion.

## Claims

1. Apparatus comprising one or more pressurizable pads (18) connected to pressurizing means (41,19) for controlling the pressure in the or each pad (18), said pressurizing means comprising a fluid reservoir (41) and a control means (19) for controlling the pressure of fluid supplied to the or each pad (18) from the reservoir,
characterized in that said control means (19) comprises an actuator (20) comprising a cylinder (20a) one end of the bore of which is in fluid connection with the reservoir (41), the other end of the bore being in fluid connection with at least one pad (18), a piston or diaphragm (27) mounted for movement in the bore of the cylinder, and electromagnetic means (A) for controlling the movement of the piston or diaphragm whereby to control the pressure within said at least one pad.

2. Apparatus according to claim 1, wherein the cylinder (20a) is made of magnetic material and carries a coil (24) and the piston or diaphragm (27) carries one or more permanent magnets.

3. Apparatus according to claim 1, wherein the piston or diaphragm (27) carries a coil and the cylinder (20a) carries one or more permanent magnets.

4. Apparatus according to claim 1, wherein the electromagnetic means A includes an electric motor.

5. Apparatus according to any previous claim and comprising means for providing control signals to the electromagnetic means (A), the control signal providing means comprising a source of high frequency pulses and means for pulse width modulating the high frequency pulses.

6. A seat (10,11) provided with apparatus according to any one of the preceding claims with at least one of the pressurizable pads (18) disposed on the seat so as to support a user, the piston or diaphragm (27) being arranged to adopt a datum position in the bore determined by the pressure of the fluid in the reservoir (41) and the pressure in the pad (18) when the seat is occupied by a user.

7. A seat according to claim 6, further comprising a piston/diaphragm position detector (44);and
means responsive to the output of the piston/diaphragm position detector for selectively increasing or decreasing pressure in the reservoir, decreasing to determine the datum position of the piston or diaphragm.

8. A seat according to any claim 7, wherein the actuator (20) contains a liquid and there is provided a liquid reservoir (49) in communication with the cylinder and a gas-filled reservoir (48) in communication with the liquid reservoir.

9. A seat according to claim 7 or 8 and comprising a pressure transducer in said gas-filled reservoir and an amplifier responsive to the output of said pressure transducer for amplifying the output at feeding it to the electromagnetic means (A).

## Patentansprüche

1. Vorrichtung, umfassend ein oder mehrere Druckkissen (18), die an ein Druckmittel (41, 19) zum Regeln des Druckes in dem oder jedem Kissen (18) angeschlossen ist, wobei das genannte Druckmittel ein Fluidreservoir (41) und ein Steuermittel (19) zum Regeln des Druckes von Fluid umfaßt, das von dem Reservoir dem oder jedem Kissen (18) zugeführt wird,
dadurch gekennzeichnet, daß das genannte Steuermmttel (19) folgendes umfaßt: ein Stellglied (20) mit einem Zylinder (20a), wobei ein Ende der Bohrung des Zylinders in Fluidverbindung mit dem Reservoir (41) und das andere Ende der Bohrung in Fluidverbindung mit wenigstens einem Kissen (18) steht, einen Kolben oder eine Membran (27), der/die in der Bohrung des Zylinders zur Bewegung darin montiert ist, und ein elektromagnetisches Mittel (A) zum Steuern der Bewegung des Kolbens oder der Membran, um auf diese Weise den Druck in dem genannten wenigstens einen Kissen zu regeln.

2. Vorrichtung nach Anspruch 1, bei der der Zylinder (20a) aus einem magnetischen Material hergestellt ist und eine Spule (24) trägt und der Kolben oder die Membran (27) einen oder mehrere Dauermagnete trägt.

3. Vorrichtung nach Anspruch 1, bei der der Kolben oder die Membran (27) eines Spule und der Zylinder (20a) einen oder mehrere Dauermagnete trägt.

4. Vorrichtung nach Anspruch 1, bei der das elektromagnetische Mittel A einen Elektromotor enthält.

5. Vorrichtung nach einem der vorherigen Ansprüche, umfassend ein Mittel zum Senden von Steuersignalen zu dem elektromagnetischen Mittel (A), wobei das Steuersignal-Sendemittel eine Hochfrequenzimpulsquelle und ein Mittel zur Impulsbreitenmodulation der Hochfrequenzimpulse umfaßt.

6. Sitz (10, 11) in Verbindung mit der Vorrichtung gemäß einem der vorherigen Ansprüche, wobei wenigstens eines der Druckkissen (18) auf dem Sitz angeordnet ist, um einen Benutzer zu tragen, wobei der Kolben bzw. die Membran (27) so angeordnet ist, daß er/sie eine Nullposition in der Bohrung einnimmt, die durch den Druck des Fluids in dem Reservoir (41) und den Druck in dem Kissen (18) bestimmt wird, wenn der Sitz von einem Benutzer besetzt ist.

7. Sitz nach Anspruch 6, ferner umfassend einen Kolben/Membran-Positionsdetektor (44); und
ein Mittel, das auf den Ausgang des Kolben/Membran-Positionsdetektors reagiert, indem es selektiv den Druck in dem Reservoir erhöht oder verringert, wobei es ihn verringert, um die Nullposition des Kolbens bzw. der Membran zu bestimmen.

8. Sitz nach Anspruch 7, bei dem das Stellglied (20) eine Flüssigkeit enthält und ein Flüssigkeitsreservoir (49) in Verbindung mit dem Zylinder und ein gasgefülltes Reservoir (48) in Verbindung mit dem Flüssigkeitsreservoir vorhanden sind.

9. Sitz nach Anspruch 7 oder 8, umfassend einen Druckwertwandler in dem genannten gasgefüllten Reservoir und einen Verstärker, der auf den Ausgang des genannten Druckwertwandlers reagiert, indem er den Ausgang bei dessen Zuführung zu dem elektromagnetischen Mittel (A) verstärkt.

## Revendications

1. Appareil comprenant un ou plusieurs coussins pressurisables (18) reliés à un moyen de pressurisation (41,19) assurant la régulation de la pression dans le ou chaque coussin (18), ledit moyen de pressurisation comprenant un réservoir de fluide (41) et un moyen de régulation (19) pour déterminer la pression du fluide fourni au ou à chaque coussin (18) à partir du réservoir,
caractérisé en ce que ledit moyen de régulation (19) comprend un actionneur (20) comprenant un cylindre (20a) dont une extrémité de l'alésage est en liaison fluide avec le réservoir (41), l'autre extrémité de l'alésage étant en liaison fluide avec au moins un coussin (18), un piston ou diaphragme (27) monté pour se déplacer dans l'alésage du cylindre, et un moyen électromagnétique (A) pour commander le mouvement du piston ou du diaphragme et déterminer ainsi la pression dans le ou lesdits coussins.

2. Appareil selon la revendication 1, dans lequel le cylindre (20a) est réalisé en matériau magnétique et porte une bobine (24), et le piston ou diaphragme (27) porte un ou plusieurs aimants permanents.

3. Appareil selon la revendication 1, dans lequel le piston ou diaphragme (27) porte une bobine et le cylindre (20a) porte un ou plusieurs aimants permanents.

4. Appareil selon la revendication 1, dans lequel le moyen électromagnétique A comprend un moteur électrique.

5. Appareil selon l'une quelconque des revendications précédentes et comprenant un moyen pour fournir des signaux de commande au moyen électromagnétique (A), le moyen de fourniture des signaux de commande comprenant une source d'impulsions à haute fréquence et un moyen de modulation de la largeur des impulsions à haute fréquence.

6. Siège (10,11) muni de l'appareil selon l'une quelconque des revendications précédentes, où au moins un des coussins pressurisables (18) est disposé sur le siège de manière à supporter un utilisateur, le piston ou diaphragme (27) étant agencé pour adopter une position de base dans l'alésage, déterminée par la pression du fluide dans le réservoir (41) et la pression dans le coussin (18) lorsque le siège est occupé par un utilisateur.

7. Siège selon la revendication 6, comprenant en outre un détecteur de position du piston/diaphragme (44); et
un moyen réagissant au signal de sortie du détecteur de position du piston/diaphragme pour augmenter ou réduire sélectivement la pression dans le réservoir, en diminuant pour déterminer la position de base du piston ou du diaphragme.

8. Siège selon la revendication 7, dans lequel l'actionneur (20) contient un liquide et un réservoir de liquide (49) est en communication avec le cylindre et un réservoir rempli de gaz (48) en communication avec le réservoir de liquide.

9. Siège selon la revendication 7 ou 8 et comprenant un transducteur de pression dans ledit réservoir rempli de gaz et un amplificateur réagissant au signal de sortie dudit transducteur de pression pour amplifier le signal de sortie et le fournir au moyen électromagnétique (A).
